# EUROPEAN PATENT APPLICATION

(11) **EP 4 693 867 A1**
(43) Date of publication of application: **11.02.2026**
(21) Application number: 24777811.1
(22) Date of filing: 20.03.2024
(51) Int. Cl.: H02M 3/158, H02J 3/32, H02J 3/38, H02J 7/35, H02J 3/28

(54) **CONTROL METHOD FOR PHOTOVOLTAIC ENERGY-STORAGE DEVICE, AND SYSTEM AND STORAGE MEDIUM**

(30) Priority: 30.03.2023 CN 202310357338
(71) Applicant: ECOFLOW INC., Guangdong 518000 (CN)
(72) Inventor: ZHAO, Mi, Shenzhen, Guangdong 518000 (CN); CHEN, Xi, Shenzhen, Guangdong 518000 (CN); WANG, Lei, Shenzhen, Guangdong 518000 (CN); TANG, Yang, Shenzhen, Guangdong 518000 (CN)
(74) Representative: Appelt, Christian W.
(86) International application number: PCT/CN2024/082559
(87) International publication number: WO 2024/199022

(57) **Abstract**

A method for controlling a photovoltaic energy storage device includes: obtaining a load required power when a photovoltaic panel does not output electric energy; generating a first driving signal according to the load required power; obtaining an output voltage of a direct current conversion circuit; outputting a second driving signal to the direct current conversion circuit if the output voltage of the direct current conversion circuit is greater than a preset open-circuit voltage, until the output voltage of the direct current conversion circuit is not greater than the open-circuit voltage. When it is detected that the output voltage of the direct current conversion circuit is greater than the open-circuit voltage, a duty cycle of a switching tube of the direct current conversion circuit is controlled to be reduced, so that the output voltage of the direct current conversion circuit is not greater than the open-circuit voltage, thereby avoiding an overload of the direct current conversion circuit.

## Description

### CROSS-REFERENCE TO RELATED APPLICATIONS

This application claims priority to Chinese Patent Application No. 202310357338.1, entitled "METHOD FOR CONTROLLING PHOTOVOLTAIC ENERGY STORAGE DEVICE, SYSTEMS, AND STORAGE MEDIUM" filed with the China National Intellectual Property Administration on March 30, 2023, which is incorporated by reference in its entirety.

### TECHNICAL FIELD

This application relates to the technical field of photovoltaics, and in particular to a method for controlling a photovoltaic energy storage device, a photovoltaic energy storage system, a photovoltaic power supply system, and a computer readable storage medium.

### BACKGROUND

In a photovoltaic energy storage system or a photovoltaic power supply system, a photovoltaic panel may feed an alternating current power grid through a direct current conversion circuit and a photovoltaic inverter. When the photovoltaic panel does not output electric energy, the photovoltaic inverter needs to be powered by the direct current conversion circuit alone. When the direct current conversion circuit powers the photovoltaic inverter alone to start the photovoltaic inverter, if an output power of the direct current conversion circuit is relatively small, an overload of the direct current conversion circuit is easily caused.

### SUMMARY

According to various embodiments of this application, a method for controlling a photovoltaic energy storage device, a photovoltaic energy storage system, a photovoltaic power supply system, and a computer readable storage medium are provided.

According to a first aspect, this application provides a method for controlling a photovoltaic energy storage device. The photovoltaic energy storage device includes an energy storage circuit and a direct current conversion circuit. A first end of the direct current conversion circuit is configured to be respectively connected to a photovoltaic panel and a photovoltaic inverter. A second end of the direct current conversion circuit is connected to the energy storage circuit. The photovoltaic energy storage device is configured to output electric energy to the photovoltaic inverter, and supply power to a load after alternating current to direct current conversion by the photovoltaic inverter. The method includes: obtaining a load required power when the photovoltaic panel does not output the electric energy; generating a first driving signal according to the load required power, the first driving signal being configured to control a switching tube in the direct current conversion circuit to be turned on/off to supply power to the photovoltaic inverter, so as to start the photovoltaic inverter; obtaining an output voltage of the direct current conversion circuit; and outputting a second driving signal to the direct current conversion circuit if the output voltage of the direct current conversion circuit is greater than an open-circuit voltage of the photovoltaic inverter, until the output voltage of the direct current conversion circuit is not greater than the open-circuit voltage. A duty cycle of the second driving signal is less than a duty cycle of the first driving signal.

According to a second aspect, this application further provides a photovoltaic energy storage system. The photovoltaic energy storage system includes an energy storage circuit, a direct current conversion circuit, and a controller. The controller is configured to implement the foregoing method for controlling a photovoltaic energy storage device.

According to a third aspect, this application further provides a photovoltaic power supply system. The photovoltaic power supply system includes a photovoltaic panel, a photovoltaic inverter, and a photovoltaic energy storage device. The photovoltaic energy storage device includes an energy storage circuit, a direct current conversion circuit, and a controller. The controller is configured to implement the foregoing method for controlling a photovoltaic energy storage device.

According to a fourth aspect, this application further provides a computer readable storage medium. The computer readable storage medium stores a computer program. The computer program, when executed by a processor, causes the processor to implement the foregoing method for controlling a photovoltaic energy storage device.

Details of one or more embodiments of this application will be presented in the following accompanying drawings and descriptions. Other features, objectives, and advantages of this application will be apparent with reference to the specification, the accompanying drawings, and the claims.

### BRIEF DESCRIPTION OF THE DRAWINGS

To describe the technical solutions in the embodiments of this application more clearly, the following briefly describes the accompanying drawings required for describing the embodiments. Apparently, the accompanying drawings in the following description show some embodiments of this application, and a person of ordinary skill in the art may still derive other drawings from these accompanying drawings without creative efforts.
FIG. 1 is a schematic structural diagram of a photovoltaic power supply system according to an embodiment of this application.
FIG. 2 is a schematic structural diagram of a photovoltaic energy storage system according to an embodiment of this application.
FIG. 3 is a schematic flowchart of a method for controlling a photovoltaic energy storage device according to an embodiment of this application.
FIG. 4 is a schematic flowchart of generating a first driving signal according to an embodiment of this application.
FIG. 5 is a schematic diagram of a direct current conversion circuit according to an embodiment of this application.
FIG. 6 is a schematic flowchart of substeps of generating a first driving signal according to an embodiment of this application.
FIG. 7 is a schematic diagram of a discharging control loop according to an embodiment of this application.
FIG. 8 is a schematic flowchart of another method for controlling a photovoltaic energy storage device according to an embodiment of this application.
FIG. 9 is a schematic flowchart of another method for controlling a photovoltaic energy storage device according to an embodiment of this application.

### DETAILED DESCRIPTION

The following will clearly and completely describe the technical solutions in the embodiments of this application in conjunction with the accompanying drawings in the embodiments of this application. Apparently, the described embodiments are some of the embodiments of this application rather than all of the embodiments. All other embodiments obtained by a person of ordinary skill in the art based on the embodiments of this application without creative efforts shall fall within the protection scope of this application.

The flowcharts shown in the accompanying drawings are only exemplary descriptions, and do not necessarily include all contents and operations/steps, nor necessarily need to be performed in the described sequence. For example, some operations/steps may further be decomposed, combined, or partially combined. Therefore, an actual execution sequence may be changed according to an actual situation.

It should be understood that the terms used in the specification of this application are merely for describing specific embodiments but are not intended to limit this application. As used in the specification and the appended claims of this application, unless the context clearly indicates otherwise, singular forms "a", "an", and "the" are intended to include plural forms.

It should also be understood that, the term "and/or" used in the specification and the appended claims of this application refers to any and all possible combinations of one or more of associated listed items, and includes these combinations.

Embodiments of this application provide a method for controlling a photovoltaic energy storage device, a photovoltaic energy storage system, a photovoltaic power supply system, and a computer readable storage medium. The control method may be configured in such a way that in the photovoltaic energy storage device, when it is detected that an output voltage of a direct current conversion circuit is greater than an open-circuit voltage, a duty cycle of a switching tube of the direct current conversion circuit is controlled to be reduced, so that the output voltage of the direct current conversion circuit is not greater than the open-circuit voltage, thereby avoiding an overload of the direct current conversion circuit.

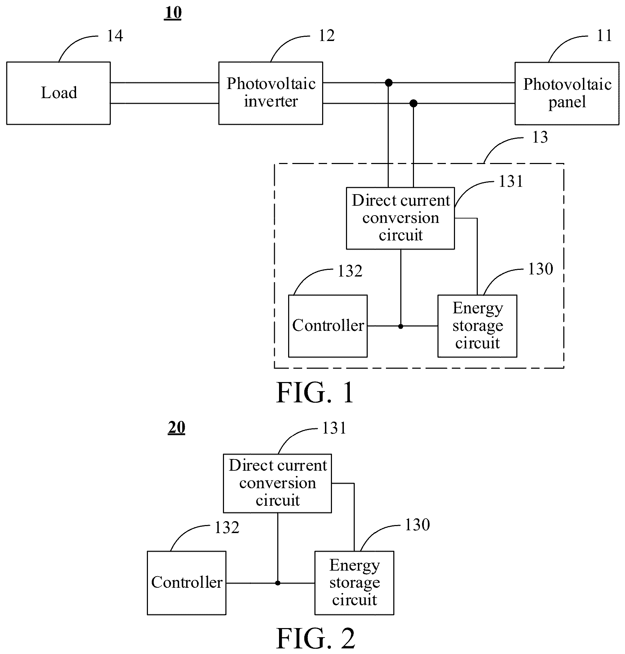

Referring to FIG. 1, FIG. 1 is a schematic structural diagram of a photovoltaic power supply system 10 according to an embodiment of this application. As shown in FIG. 1, the photovoltaic power supply system 10 may include a photovoltaic panel 11, a photovoltaic inverter 12, and a photovoltaic energy storage device 13. The photovoltaic panel 11 is connected to the photovoltaic inverter 12, and the photovoltaic energy storage device 13 is respectively connected to the photovoltaic panel 11 and the photovoltaic inverter 12. For example, the photovoltaic panel 11 may be connected to the photovoltaic inverter 12 through a direct current bus, and the photovoltaic energy storage device 13 may be respectively connected to the photovoltaic panel 11 and the photovoltaic inverter 12 through a direct current bus.

It should be noted that the photovoltaic panel 11 is configured to convert solar energy into electric energy and output the electric energy to the photovoltaic inverter 12 and/or the photovoltaic energy storage device 13. The photovoltaic inverter 12 is configured to convert direct current outputted by the photovoltaic panel 11 into alternating current.

Exemplarily, the photovoltaic energy storage device 13 may be a mobile energy storage device, a household energy storage device, or an energy storage device mounted on a vehicle.

As shown in FIG. 1, the photovoltaic energy storage device 13 is configured to output electric energy to the photovoltaic inverter 12, and supply power to a load 14 after alternating current to direct current conversion by the photovoltaic inverter 12. The load 14 may be an alternating current power grid, or may be a power consuming device. It should be noted that the electric energy outputted by the photovoltaic energy storage device 13 may be electric energy outputted by the photovoltaic panel 11 (that is, the electric energy outputted by the photovoltaic panel 11 is supplied to the load 14 after passing through a bypass or a power conversion circuit in the photovoltaic energy storage device 13), or may be electric energy outputted by a battery inside the photovoltaic energy storage device 13.

As shown in FIG. 1, the photovoltaic energy storage device 13 may include an energy storage circuit 130, a direct current conversion circuit 131, and a controller 132. A first end of the direct current conversion circuit 131 is configured to be respectively connected to the photovoltaic panel 11 and the photovoltaic inverter 12, and a second end of the direct current conversion circuit 131 is connected to the energy storage circuit 130.

Exemplarily, the energy storage circuit 130 may include a battery, configured to store electric energy when the photovoltaic panel 11 outputs electric energy, and configured to output electric energy to the photovoltaic inverter 12 when the photovoltaic panel 11 does not output electric energy. It may be understood that the energy storage circuit 130 is usually charged by using remaining power when an output power of the photovoltaic panel 11 is greater than a required power of the photovoltaic inverter 12. The direct current conversion circuit 131 may include a DC/DC (Direct Current to Direct Current) conversion unit, configured to perform voltage conversion on the electric energy outputted by the photovoltaic panel 11, and configured to perform voltage conversion on the electric energy outputted by the energy storage circuit 130.

The controller 132 may be connected to the energy storage circuit 130 and the direct current conversion circuit 131 through a bus. The bus is, for example, any suitable communication bus such as an I²C (Inter-integrated Circuit) bus. The controller 132 is configured to provide calculation and control capabilities, to support operation of the entire photovoltaic energy storage device 13.

The controller 132 may be a central processing unit (CPU), and the processor may further be another general-purpose processor, a digital signal processor (DSP), an application specific integrated circuit (ASIC), a field-programmable gate array (FPGA) or another programmable logic device, a discrete gate or a transistor logic device, a discrete hardware component, or the like. The general-purpose processor may be a microprocessor, or the processor may be any conventional processor, or the like.

Referring to FIG. 2, FIG. 2 is a schematic structural diagram of a photovoltaic energy storage system 20 according to an embodiment of this application. As shown in FIG. 2, the photovoltaic energy storage system 20 may include an energy storage circuit 130, a direct current conversion circuit 131, and a controller 132.

Exemplarily, the energy storage circuit 130 may include a battery, configured to store electric energy generated by a power generation device, and configured to output the electric energy to a load. The power generation device may be a photovoltaic panel, and the load may be an alternating current power grid, or may be a power consuming device.

Exemplarily, the direct current conversion circuit 131 may include a DC/DC conversion unit, configured to perform voltage conversion on the electric energy generated by the power generation device, and configured to perform voltage conversion on the electric energy outputted by the energy storage circuit 130.

In this embodiment of this application, the DC/DC conversion unit may include a boosting circuit and a DAB (Dual Active Bridge) circuit, or may include a boosting circuit and an LLC series-parallel resonance circuit. Specific circuit structures of the boosting circuit, the DAB circuit, and the LLC circuit are not limited herein.

Exemplarily, the controller 132 is configured to control charging and discharging of the energy storage circuit 130, and is further configured to control the direct current conversion circuit 131 to perform voltage conversion, etc.

In this embodiment of this application, when the controller 132 in FIG. 1 and FIG. 2 executes related computer programs, the following steps may be implemented:
obtaining a load required power when the photovoltaic panel does not output the electric energy; generating a first driving signal according to the load required power, the first driving signal being configured to control a switching tube in the direct current conversion circuit to be turned on/off to supply power to the photovoltaic inverter, so as to start the photovoltaic inverter; obtaining an output voltage of the direct current conversion circuit; and outputting a second driving signal to the direct current conversion circuit if the output voltage of the direct current conversion circuit is greater than an open-circuit voltage of the photovoltaic inverter, until the output voltage of the direct current conversion circuit is not greater than the open-circuit voltage, where a duty cycle of the second driving signal is less than a duty cycle of the first driving signal.

In an embodiment, when generating the first driving signal according to the load required power, the controller 132 is configured to implement:
obtaining output electrical parameters of the direct current conversion circuit; generating the first driving signal based on the load required power, the output electrical parameters of the direct current conversion circuit, and a preset discharging control loop; and outputting the first driving signal to the direct current conversion circuit.

In an embodiment, the first driving signal is a driving signal having a first duty cycle, and the direct current conversion circuit includes an inductance unit and at least one bridge arm unit. The bridge arm unit includes two switching tubes connected in series. The output electrical parameters include a discharging voltage sampling value, a discharging current sampling value, and an inductive current sampling value of the direct current conversion circuit. When generating the first driving signal based on the load required power, the output electrical parameters of the direct current conversion circuit, and the preset discharging control loop, the controller 132 is configured to implement:
inputting the load required power, the discharging voltage sampling value, the discharging current sampling value, and the inductive current sampling value to the discharging control loop to perform duty cycle calculation, to obtain the first duty cycle; and generating the first driving signal to the switching tubes of the bridge arm unit according to the first duty cycle.

In an embodiment, the discharging control loop includes a divider, a first adder, a first deviator, a limiter, a second adder, and a second deviator. When inputting the load required power, the discharging voltage sampling value, the discharging current sampling value, and the inductive current sampling value to the discharging control loop to perform duty cycle calculation, to obtain the first duty cycle, the controller 132 is configured to implement:
calculating, based on the divider, a discharging current reference value of the direct current conversion circuit according to the load required power and the discharging voltage sampling value; performing, based on the first adder, the first deviator, and the limiter, deviation adjustment according to a current difference between the discharging current reference value and the discharging current sampling value, and then performing amplitude limiting processing to obtain an inductive current reference value; and performing, based on the second adder and the second deviator, deviation adjustment according to a current difference between the inductive current reference value and the inductive current sampling value to obtain the first duty cycle.

In an embodiment, the controller 132 is further configured to implement:
generating a corresponding driving signal based on the preset discharging control loop and real-time parameters of the direct current conversion circuit to control the direct current conversion circuit if the output voltage of the direct current conversion circuit is less than the open-circuit voltage. Real-time parameters include a discharging voltage sampling value, a discharging current sampling value, and an inductive current sampling value of the direct current conversion circuit.

In an embodiment, after outputting the second driving signal to the direct current conversion circuit until the output voltage of the direct current conversion circuit is not greater than the open-circuit voltage, the controller 132 is further configured to implement:
controlling the direct current conversion circuit based on the load required power, a preset discharging control loop, and real-time parameters of the direct current conversion circuit. Real-time parameters include a discharging voltage sampling value, a discharging current sampling value, and an inductive current sampling value of the direct current conversion circuit.

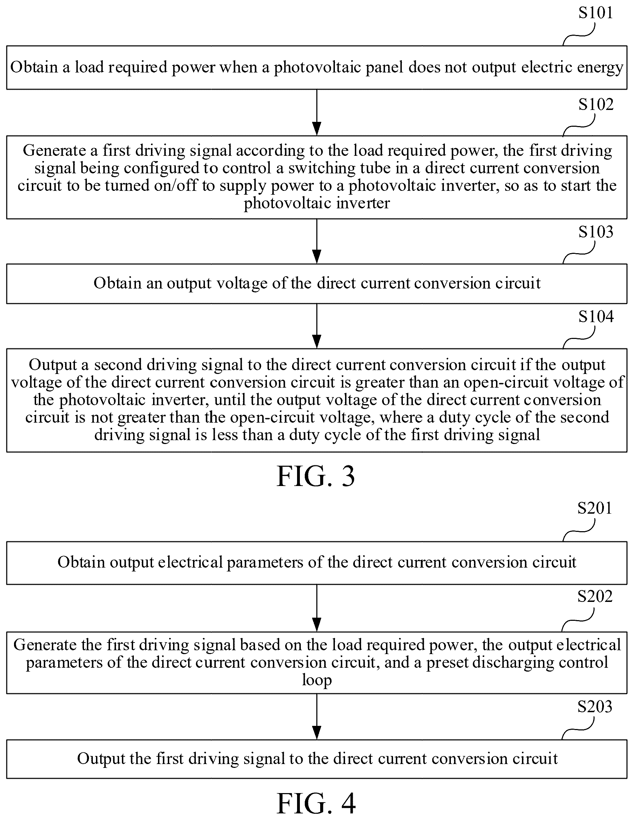

The following describes some implementations of this application in detail in conjunction with the accompanying drawings. In a case of no conflict, the following embodiments and features in the embodiments may be combined with each other. Referring to FIG. 3, FIG. 3 is a schematic flowchart of a method for controlling a photovoltaic energy storage device according to an embodiment of this application. As shown in FIG. 3, the method for controlling a photovoltaic energy storage device includes step S101 to step S104.

Step S101: Obtain a load required power when a photovoltaic panel does not output electric energy.

It should be noted that the method for controlling a photovoltaic energy storage device in this embodiment of this application should be configured to be used in a scenario in which a direct current conversion circuit in the photovoltaic energy storage device starts a photovoltaic inverter. When the photovoltaic panel does not output electric energy, the direct current conversion circuit needs to supply power to the photovoltaic inverter to start the photovoltaic inverter, so that an energy storage circuit in the photovoltaic energy storage device can output electric energy to a load through the photovoltaic inverter.

Exemplarily, when the photovoltaic panel does not output the electric energy, the load required power is obtained. It should be noted that in scenarios such as an overcast day or night, the photovoltaic panel cannot output electric energy.

For example, when obtaining the load required power, a controller in the photovoltaic energy storage device may establish a communication connection with the load and read the load required power corresponding to the load. For another example, when obtaining the load required power, the controller in the photovoltaic energy storage device may further identify a load type of the current load, and find, based on a preset correspondence between the load type and the load required power, the corresponding load required power according to the load type of the current load. The correspondence between the load type and the load required power may be predefined and stored in a local database or a local magnetic disk of the controller.

It should be noted that when the photovoltaic panel does not output electric energy, the load required power of the load is provided by an alternating current power grid. In this embodiment of this application, by obtaining the load required power, a driving signal configured to control the direct current conversion circuit may be generated according to the load required power, and the direct current conversion circuit may further be controlled, according to the load required power, to perform power compensation on the photovoltaic inverter, so that the power obtained by the load from the alternating current power grid is zero, thereby reducing electricity cost.

Step S102: Generate a first driving signal according to the load required power, the first driving signal being configured to control a switching tube in the direct current conversion circuit to be turned on/off to supply power to a photovoltaic inverter, so as to start the photovoltaic inverter.

It should be noted that the direct current conversion circuit may include a plurality of switching tubes, and a size of a duty cycle of the switching tubes determines parameters of the direct current conversion circuit, such as a discharging voltage and a discharging current. To enable the power outputted by the direct current conversion circuit to match the load required power, the first driving signal configured to control the switching tube in the direct current conversion circuit to be turned on/off needs to be generated according to the load required power.

Exemplarily, the switching tube may include, but is not limited to, a triode, a metal-oxide-semiconductor field-effect transistor (MOSFET), an insulated gate bipolar transistor (IGBT), or the like.

Exemplarily, after the first driving signal is generated according to the load required power, the switching tube in the direct current conversion circuit may be controlled to be turned on/off according to the first driving signal. In this case, the direct current conversion circuit may supply power to the photovoltaic inverter based on the electric energy of the energy storage circuit, so as to start the photovoltaic inverter. For example, when the direct current conversion circuit includes a boosting circuit and a DAB circuit, the first driving signal may be outputted to the switching tubes in the boosting circuit and the DAB circuit.

In this embodiment of this application, when the photovoltaic inverter is started, the direct current conversion circuit needs to generate the first driving signal according to the load required power, and further may output power matching the load required power to the photovoltaic inverter, so as to start the photovoltaic inverter. It should be noted that the photovoltaic inverter can only absorb relatively little power when being started. Due to a function of power feedback control in the direct current conversion circuit, the duty cycle of the switching tube in the direct current conversion circuit increases, so that the output power can reach the load required power, and consequently, the voltage at an input of the photovoltaic inverter increases, thereby ensuring the output voltage of a direct current conversion module, providing sufficient voltage and sufficient turn-on power for the photovoltaic inverter 12, and ensuring normal startup of the photovoltaic inverter.

In the foregoing embodiment, the first driving signal is generated according to the load required power, and the switching tube in the direct current conversion circuit may be controlled to be turned on/off to supply power to the photovoltaic inverter, so as to start the photovoltaic inverter.

Step S103: Obtain an output voltage of the direct current conversion circuit.

It should be noted that the photovoltaic inverter enters a self-check state when being started, and then enters a working state after completing the self-check state. When the photovoltaic inverter is in the self-checking state, power required is not large, so that an external resistance of the direct current conversion circuit is large, and the output voltage of the direct current conversion circuit increases. If the output voltage of the direct current conversion circuit is too large, the direct current conversion circuit is overloaded.

Exemplarily, the output voltage of the direct current conversion circuit driven by the first driving signal may be obtained. For example, a voltage at an output side of the direct current conversion electrical appliance may be sampled by using a voltage sampling circuit, to obtain the output voltage of the direct current conversion circuit. For another example, a voltage at an input side of the photovoltaic inverter may also be sampled to obtain the output voltage of the direct current conversion circuit. It may be understood that the direct current conversion circuit is connected to the photovoltaic inverter, and therefore, the output voltage of the direct current conversion circuit is the same as an input voltage of the photovoltaic inverter.

In the foregoing embodiment, the output voltage of the direct current conversion circuit is obtained, and subsequently, the output voltage of the direct current conversion circuit may be compared with an open-circuit voltage of the photovoltaic inverter, so as to determine whether the output voltage of the direct current conversion circuit is greater than the open-circuit voltage.

Step S104: Output a second driving signal to the direct current conversion circuit if the output voltage of the direct current conversion circuit is greater than an open-circuit voltage of the photovoltaic inverter, until the output voltage of the direct current conversion circuit is not greater than the open-circuit voltage, where a duty cycle of the second driving signal is less than a duty cycle of the first driving signal.

It should be noted that the open-circuit voltage of the photovoltaic inverter is determined by a minimum startup voltage and/or a maximum working voltage of the photovoltaic inverter. For example, a range of the open-circuit voltage is between the minimum startup voltage and the maximum working voltage of the photovoltaic inverter.

Exemplarily, after the output voltage of the direct current conversion circuit is obtained, the output voltage of the current conversion circuit may be compared with the open-circuit voltage of the photovoltaic inverter. If the output voltage of the direct current conversion circuit is greater than the open-circuit voltage of the photovoltaic inverter, the second driving signal is outputted to the direct current conversion circuit until the output voltage of the direct current conversion circuit is not greater than the open-circuit voltage.

The duty cycle of the second driving signal is less than the duty cycle of the first driving signal. It may be understood that the duty cycle of the switching tube in the direct current conversion circuit determines the size of the output voltage of the direct current conversion circuit. Therefore, to reduce the output voltage of the direct current conversion circuit driven by the first driving signal, the duty cycle of the driving signal of the direct current conversion circuit needs to be reduced.

Exemplarily, the duty cycle of the second driving signal may be set according to an actual situation. For example, the duty cycle of the second driving signal is 1/2, 1/3, or the like of the duty cycle of the first driving signal.

According to the foregoing embodiment, when the photovoltaic inverter is started, if it is detected that the output voltage of the direct current conversion circuit is greater than the open-circuit voltage, the duty cycle of the switching tube of the direct current conversion circuit is controlled to be reduced, so that the output voltage of the direct current conversion circuit is not greater than the open-circuit voltage, thereby avoiding the overload of the direct current conversion circuit.

It may be understood that in the foregoing embodiment, reducing the output voltage of the direct current conversion circuit is equivalent to reducing the input voltage of the photovoltaic inverter, and thereby, the maximum working power of the photovoltaic inverter during startup can be reduced, so that the maximum working power of the photovoltaic inverter is not greater than the output power of the direct current conversion circuit, thereby avoiding the overload of the direct current conversion circuit.

In some embodiments, the duty cycle of the second driving signal is a minimum duty cycle of the switching tube of the direct current conversion circuit. Exemplarily, when the output voltage of the direct current conversion circuit is greater than the open-circuit voltage of the photovoltaic inverter, the second driving signal with the minimum duty cycle is outputted to the direct current conversion circuit until the output voltage of the direct current conversion circuit is not greater than the open-circuit voltage. The minimum duty cycle may be set according to working parameters of the switching tube in the direct current conversion circuit, and specific values are not limited herein.

It should be noted that in the foregoing embodiment, the duty cycle of the second driving signal is set to the minimum duty cycle of the switching tube of the direct current conversion circuit, so that the output voltage of the direct current conversion circuit can be rapidly reduced, thereby preventing the direct current conversion circuit from being damaged due to an excessively large output voltage.

Referring to FIG. 4, FIG. 4 is a schematic flowchart of generating the first driving signal according to an embodiment of this application. In step S102, the generating a first driving signal according to the load required power may include step S201 to step S203 as follows.

Step S201: Obtain output electrical parameters of the direct current conversion circuit.

Exemplarily, the output electrical parameters may include a discharging voltage sampling value, a discharging current sampling value, and an inductive current sampling value of the direct current conversion circuit.

In this embodiment of this application, the direct current conversion circuit may include an inductance unit and at least one bridge arm unit. The bridge arm unit includes two switching tubes connected in series. For example, when the direct current conversion circuit includes a boosting circuit and a DAB circuit, the inductance unit may be an inductance in the DAB circuit, and the bridge arm unit may be a bridge arm unit in the boosting circuit.

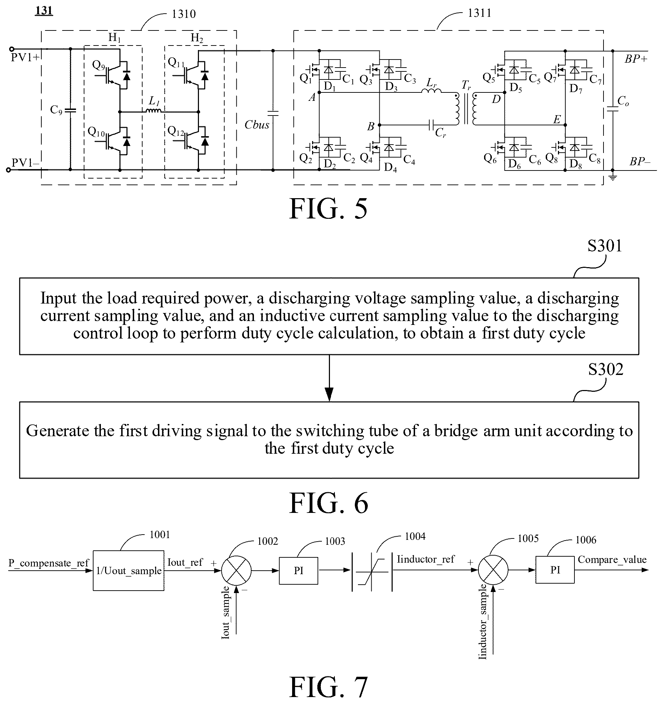

Referring to FIG. 5, FIG. 5 is a schematic diagram of a direct current conversion circuit. As shown in FIG. 5, the direct current conversion circuit 131 may include a boosting circuit 1310 and a DAB circuit 1311. An input of the boosting circuit 1310 is connected to a PV1+ terminal and a PV1- terminal of the photovoltaic panel 11 (not shown in the figure), an output of the boosting circuit 1310 is connected to an input of the DAB circuit 1311, and an output of the DAB circuit 1311 is connected to a BP+ terminal and a BP- terminal of the energy storage circuit 130 (not shown in the figure). The boosting circuit 1310 may include a first bridge arm unit H₁ and a second bridge arm unit H₂. The DAB circuit 1311 may include an inductor Lr.

Exemplarily, in the foregoing embodiment, a voltage at the output side of the direct current conversion circuit may be collected by using a voltage collection circuit to obtain the discharging voltage sampling value of the direct current conversion circuit. A current at the output side of the direct current conversion circuit may be collected by using a current collection circuit to obtain the discharging current sampling value of the direct current conversion circuit. A current of the inductance unit of the direct current conversion circuit may be collected by using a current collection circuit to obtain the inductive current sampling value of the direct current conversion circuit.

Step S202: Generate the first driving signal based on the load required power, the output electrical parameters of the direct current conversion circuit, and a preset discharging control loop.

Exemplarily, after the output electrical parameters of the direct current conversion circuit are obtained, the first driving signal may be generated based on the load required power, the output electrical parameters of the direct current conversion circuit, and the preset discharging control loop. The first driving signal is a driving signal having a first duty cycle. For example, the load required power and the output electrical parameters of the direct current conversion circuit may be inputted into the discharging control loop for operation, to obtain the first duty cycle.

Exemplarily, the first driving signal may be a pulse-width modulation (PWM) signal.

It should be noted that, in this embodiment of this application, the preset discharging control loop is configured to control the output voltage of the direct current conversion circuit. The discharging control loop may include a current loop. The operation is performed according to the load required power and the output electrical parameters of the direct current conversion circuit to output the duty cycle. Further, the switching tube in the direct current conversion circuit may be controlled to be turned on/off according to the duty cycle, to regulate the output voltage of the direct current conversion circuit.

Step S203: Output the first driving signal to the direct current conversion circuit.

Exemplarily, after the first driving signal is generated based on the load required power, the output electrical parameters of the direct current conversion circuit, and the preset discharging control loop, the first driving signal may be outputted to the direct current conversion circuit. For example, the first driving signal is outputted to the bridge arm unit of the direct current conversion circuit to control the switching tubes in the bridge arm unit to be turned on/off.

The first driving signal is outputted to the direct current conversion circuit, so that the direct current conversion circuit works according to the first driving signal and discharges the energy storage module, thereby obtaining the output voltage of the direct current conversion circuit.

Referring to FIG. 6, FIG. 6 is a schematic flowchart of sub-steps of generating the first driving signal according to an embodiment of this application. In step S202, the generating the first driving signal may include step S301 and step S302 as follows.

Step S301: Input the load required power, a discharging voltage sampling value, a discharging current sampling value, and an inductive current sampling value to the discharging control loop to perform duty cycle calculation, to obtain a first duty cycle.

Referring to FIG. 7, FIG. 7 is a schematic diagram of a discharging control loop according to an embodiment of this application. As shown in FIG. 7, the discharging control loop may include a divider 1001, a first adder 1002, a first deviator 1003, a limiter 1004, a second adder 1005, and a second deviator 1006. P_compensate_ref represents the load required power, Uout_sample represents the discharging voltage sampling value, Iout_sample represents the discharging current sampling value, and Iinductor_sample represents the inductive current sampling value.

It should be noted that the first deviator 1003 and the second deviator 1006 may be proportional integral (PI) regulators, configured to quickly regulate a deviation of a current and eliminate a residual. The limiter 1004 is configured to limit an amplitude of the current.

In some embodiments, the inputting the load required power, the inputting the load required power, a discharging voltage sampling value, a discharging current sampling value, and an inductive current sampling value to the discharging control loop to perform duty cycle calculation, to obtain a first duty cycle includes: calculating, based on the divider, a discharging current reference value of the direct current conversion circuit according to the load required power and the discharging voltage sampling value; performing, based on the first adder, the first deviator, and the limiter, deviation adjustment according to a current difference between the discharging current reference value and the discharging current sampling value, and then performing amplitude limiting processing to obtain an inductive current reference value; and performing, based on the second adder and the second deviator, deviation adjustment according to a current difference between the inductive current reference value and the inductive current sampling value to obtain the first duty cycle.

Exemplarily, as shown in FIG. 7, first, the load required power P_compensate_ref and the discharging voltage sampling value Uout_sample may be inputted to the divider 1001 for division, to obtain the discharging current reference value Iout_ref of the direct current conversion circuit. Next, the discharging current reference value Iout_ref and the discharging current sampling value Iout_sample are inputted to the first adder 1002 for subtraction to obtain the current difference, and then the obtained current difference is subjected to deviation adjustment by the first deviator 1003 and then inputted to the limiter 1004 for amplitude limiting processing, to obtain the inductive current reference value Iinductor_ref. Finally, the inductive current reference value Iinductor_ref and the inductive current sampling value Iinductor_sample are inputted to the second adder 1005 for subtraction, and the obtained current value is inputted to the second deviator 1006 for deviation adjustment to obtain the first duty cycle Compare_value.

For example, the current value obtained after the deviation adjustment by the second deviator 1006 may be used as a pulse duration in the first duty cycle. It should be noted that the duty cycle refers to a ratio of a pulse duration to a modulation period in a modulation period.

Step S302: Generate a first driving signal to the switching tube of a bridge arm unit according to the first duty cycle.

Exemplarily, after the first duty cycle is obtained, the first driving signal may be generated to the switching tube of the bridge arm unit according to the first duty cycle. For example, a PWM signal is outputted to the switching tube in the bridge arm unit according to the first duty cycle, so that the switching tube in the bridge arm unit is turned on/off according to the first duty cycle.

In the foregoing embodiment, the load required power, the discharging voltage sampling value, the discharging current sampling value, and the inductive current sampling value are inputted to the discharging control loop to perform duty cycle calculation, so that the switching tube of the bridge arm unit can be controlled to be turned on/off according to the obtained first duty cycle, and thus, the direct current conversion circuit can supply power to the photovoltaic inverter.

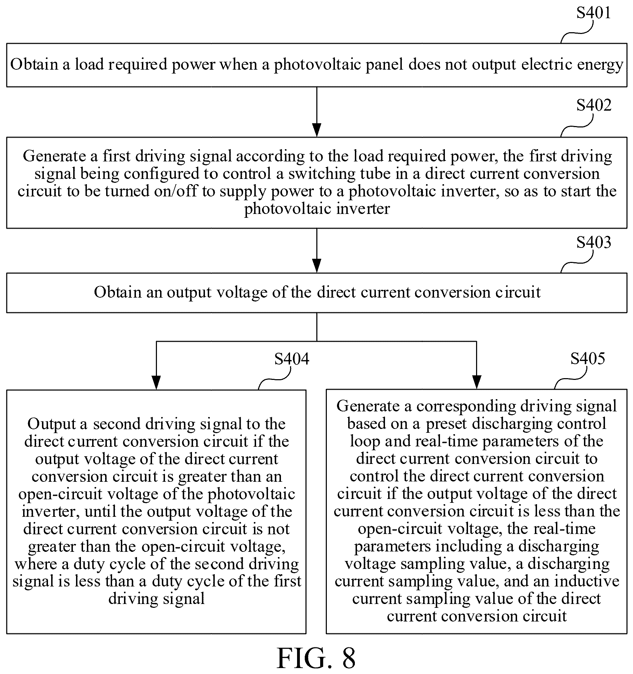

Referring to FIG. 8, FIG. 8 is a schematic flowchart of another method for controlling a photovoltaic energy storage device according to an embodiment of this application, which may include step S401 to step S405 as follows.

Step S401: Obtain a load required power when a photovoltaic panel does not output electric energy.

Step S402: Generate a first driving signal according to the load required power, the first driving signal being configured to control a switching tube in a direct current conversion circuit to be turned on/off to supply power to a photovoltaic inverter, so as to start the photovoltaic inverter.

Step S403: Obtain an output voltage of the direct current conversion circuit.

Step S404: Output a second driving signal to the direct current conversion circuit if the output voltage of the direct current conversion circuit is greater than an open-circuit voltage of the photovoltaic inverter, until the output voltage of the direct current conversion circuit is not greater than the open-circuit voltage, where a duty cycle of the second driving signal is less than a duty cycle of the first driving signal.

It may be understood that step S401 to step S404 are the same as step S101 to step S104, and details are not described herein again.

Step S405: Generate a corresponding driving signal based on a preset discharging control loop and real-time parameters of the direct current conversion circuit to control the direct current conversion circuit if the output voltage of the direct current conversion circuit is less than the open-circuit voltage, the real-time parameters including a discharging voltage sampling value, a discharging current sampling value, and an inductive current sampling value of the direct current conversion circuit.

Exemplarily, when the output voltage of the direct current conversion circuit is less than the open-circuit voltage, the corresponding driving signal may be generated based on the preset discharging control loop and the real-time parameters of the direct current conversion circuit to control the direct current conversion circuit.

The real-time parameters may include the discharging voltage sampling value, the discharging current sampling value, and the inductive current sampling value of the direct current conversion circuit.

In some embodiments, the preset discharging control loop is shown in FIG. 7; when the corresponding driving signal is generated based on the preset discharging control loop and the real-time parameters of the direct current conversion circuit to control the direct current conversion circuit, the load required power, the discharging voltage sampling value, the discharging current sampling value, and the inductive current sampling value may be inputted to the discharging control loop in FIG. 7 to perform duty cycle calculation, to obtain the corresponding duty cycle; and a third driving signal is generated to the switching tubes of the bridge arm unit according to the obtained duty cycle. For a specific duty cycle calculation process, reference may be made to detailed descriptions of the foregoing embodiment, and details are not described herein again.

It should be noted that when the output voltage of the direct current conversion circuit is less than the open-circuit voltage, there is no danger of the overload of the direct current conversion circuit. Therefore, there is no need to reduce the output voltage of the direct current conversion circuit according to the second driving signal, but a corresponding driving signal is directly generated based on the preset discharging control loop and the real-time parameters of the direct current conversion circuit, so as to control the direct current conversion circuit to work normally.

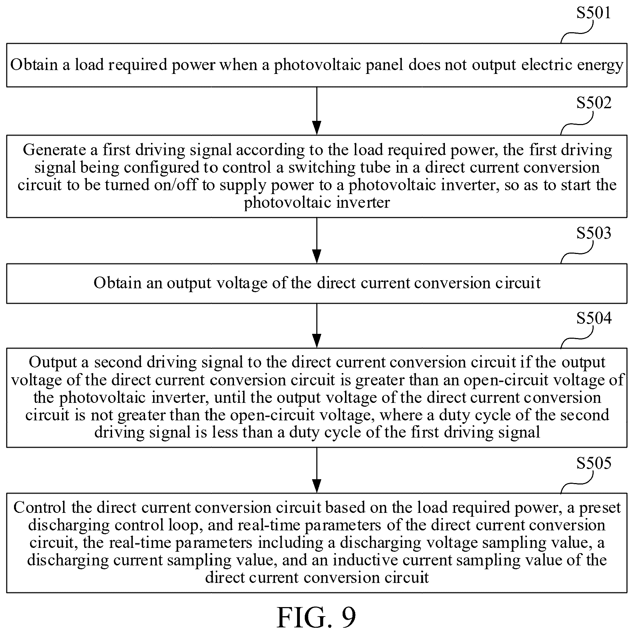

Referring to FIG. 9, FIG. 9 is a schematic flowchart of another method for controlling a photovoltaic energy storage device according to an embodiment of this application, which may include step S501 to step S505 as follows.

Step S501: Obtain a load required power when a photovoltaic panel does not output electric energy.

Step S502: Generate a first driving signal according to the load required power, the first driving signal being configured to control a switching tube in a direct current conversion circuit to be turned on/off to supply power to a photovoltaic inverter, so as to start the photovoltaic inverter.

Step S503: Obtain an output voltage of the direct current conversion circuit.

Step S504: Output a second driving signal to the direct current conversion circuit if the output voltage of the direct current conversion circuit is greater than an open-circuit voltage of the photovoltaic inverter, until the output voltage of the direct current conversion circuit is not greater than the open-circuit voltage, where a duty cycle of the second driving signal is less than a duty cycle of the first driving signal.

It may be understood that, step S501 to step S504 are the same as step S101 to step S104, and details are not described herein again.

Step S505: Control the direct current conversion circuit based on the load required power, a preset discharging control loop, and real-time parameters of the direct current conversion circuit, the real-time parameters including a discharging voltage sampling value, a discharging current sampling value, and an inductive current sampling value of the direct current conversion circuit.

Exemplarily, after the second driving signal is outputted to the direct current conversion circuit until the output voltage of the direct current conversion circuit is not greater than the open-circuit voltage, the direct current conversion circuit may be controlled based on the load required power, the preset discharging control loop, and the real-time parameters of the direct current conversion circuit.

Exemplarily, the preset discharging control loop is shown in FIG. 7. For a specific calculation process, reference may be made to detailed descriptions of the foregoing embodiment, and details are not described herein again.

It should be noted that when the output voltage of the direct current conversion circuit is less than or equal to the open-circuit voltage, the discharging control loop is used again to control the direct current conversion circuit. In this case, the duty cycle suddenly increases, which can ensure the increase in the output voltage of the direct current conversion circuit, so that the output voltage can be stable around the open-circuit voltage, thereby providing sufficient starting power for the photovoltaic inverter and avoiding circuit overload. When the photovoltaic inverter enters a working state after completing a self-check state, tracking of a maximum power point is started, and absorbed power increases. In this case, the output current of the direct current conversion circuit increases, and the output voltage decreases to a normal working voltage.

In the foregoing embodiment, when the output voltage of the direct current conversion circuit is not greater than the open-circuit voltage, the direct current conversion circuit is controlled based on the load required power, the discharging control loop, and the real-time parameters of the direct current conversion circuit, so as to not only provide sufficient starting power for the photovoltaic inverter, but also enable the direct current conversion circuit to run at a normal working voltage, thereby avoiding the overload of the direct current conversion circuit.

An embodiment of this application further provides a computer readable storage medium. The computer readable storage medium stores a computer program. The computer program includes a program instruction, and a processor executes the above program instruction to implement the method for controlling a photovoltaic energy storage device according to the embodiments of this application.

The computer readable storage medium may be an internal storage unit of the photovoltaic energy storage device of the foregoing embodiment, for example, a hard disk or memory of the photovoltaic energy storage device. The computer readable storage medium may alternatively be an external storage device of the photovoltaic energy storage device, for example, a plug-in hard disk, a smart media card (SMC), a secure digital card (SD Card), or a flash card that is equipped on the photovoltaic energy storage device.

Further, the computer readable storage medium may mainly include a program storage area and a data storage area. The program storage area may store an operating system, programs required by at least one function, and the like. The data storage area may store data created according to the programs, and the like.

The foregoing descriptions are merely specific implementations of this application, but the protection scope of this application is not limited thereto. Any person skilled in the art can easily conceive of various equivalent modifications or replacements within the technical scope disclosed in this application, and these modifications or replacements shall fall within the protection scope of this application. Therefore, the protection scope of this application shall be subject to the protection scope of the claims.

## Claims

1. A method for controlling a photovoltaic energy storage device, wherein the photovoltaic energy storage device comprises an energy storage circuit and a direct current conversion circuit; a first end of the direct current conversion circuit is configured to be respectively connected to a photovoltaic panel and a photovoltaic inverter; a second end of the direct current conversion circuit is connected to the energy storage circuit; the photovoltaic energy storage device is configured to output electric energy to the photovoltaic inverter, and supply power to a load after alternating current to direct current conversion by the photovoltaic inverter; and the method comprises:
obtaining a load required power when the photovoltaic panel does not output the electric energy;
generating a first driving signal according to the load required power, the first driving signal being configured to control a switching tube in the direct current conversion circuit to be turned on/off to supply power to the photovoltaic inverter, so as to start the photovoltaic inverter;
obtaining an output voltage of the direct current conversion circuit; and
outputting a second driving signal to the direct current conversion circuit if the output voltage of the direct current conversion circuit is greater than an open-circuit voltage of the photovoltaic inverter, until the output voltage of the direct current conversion circuit is not greater than the open-circuit voltage, wherein a duty cycle of the second driving signal is less than a duty cycle of the first driving signal.

2. The method for controlling a photovoltaic energy storage device according to claim 1, wherein the generating a first driving signal according to the load required power comprises:
obtaining output electrical parameters of the direct current conversion circuit;
generating the first driving signal based on the load required power, the output electrical parameters of the direct current conversion circuit, and a preset discharging control loop; and
outputting the first driving signal to the direct current conversion circuit.

3. The method for controlling a photovoltaic energy storage device according to claim 2, wherein the first driving signal is a driving signal having a first duty cycle, and the direct current conversion circuit comprises an inductance unit and at least one bridge arm unit; the bridge arm unit comprises two switching tubes connected in series; the output electrical parameters comprise a discharging voltage sampling value, a discharging current sampling value, and an inductive current sampling value of the direct current conversion circuit; and
the generating the first driving signal based on the load required power, the output electrical parameters of the direct current conversion circuit, and a preset discharging control loop comprises:
inputting the load required power, the discharging voltage sampling value, the discharging current sampling value, and the inductive current sampling value to the discharging control loop to perform duty cycle calculation, to obtain the first duty cycle; and
generating the first driving signal to the switching tubes of the bridge arm unit according to the first duty cycle.

4. The method for controlling a photovoltaic energy storage device according to claim 3, wherein the discharging control loop comprises a divider, a first adder, a first deviator, a limiter, a second adder, and a second deviator; and the inputting the load required power, the discharging voltage sampling value, the discharging current sampling value, and the inductive current sampling value to the discharging control loop to perform duty cycle calculation, to obtain the first duty cycle comprises:
calculating, based on the divider, a discharging current reference value of the direct current conversion circuit according to the load required power and the discharging voltage sampling value;
performing, based on the first adder, the first deviator, and the limiter, deviation adjustment according to a current difference between the discharging current reference value and the discharging current sampling value, and then performing amplitude limiting processing to obtain an inductive current reference value; and
performing, based on the second adder and the second deviator, deviation adjustment according to a current difference between the inductive current reference value and the inductive current sampling value to obtain the first duty cycle.

5. The method for controlling a photovoltaic energy storage device according to claim 3, wherein the method further comprises:
generating a corresponding driving signal based on the preset discharging control loop and real-time parameters of the direct current conversion circuit to control the direct current conversion circuit if the output voltage of the direct current conversion circuit is less than the open-circuit voltage, the real-time parameters comprising a discharging voltage sampling value, a discharging current sampling value, and an inductive current sampling value of the direct current conversion circuit.

6. The method for controlling a photovoltaic energy storage device according to claim 1, wherein the duty cycle of the second driving signal is a minimum duty cycle of the switching tube of the direct current conversion circuit.

7. The method for controlling a photovoltaic energy storage device according to claim 1, wherein after the outputting a second driving signal to the direct current conversion circuit until the output voltage of the direct current conversion circuit is not greater than the open-circuit voltage, the method further comprises:
controlling the direct current conversion circuit based on the load required power, a preset discharging control loop, and real-time parameters of the direct current conversion circuit, the real-time parameters comprising a discharging voltage sampling value, a discharging current sampling value, and an inductive current sampling value of the direct current conversion circuit.

8. A photovoltaic energy storage system, comprising an energy storage circuit, a direct current conversion circuit, and a controller, the controller being configured to implement the method for controlling the photovoltaic energy storage device according to any one of claims 1 to 7.

9. A photovoltaic power supply system, comprising a photovoltaic panel, a photovoltaic inverter, and a photovoltaic energy storage device, the photovoltaic energy storage device comprising an energy storage circuit, a direct current conversion circuit, and a controller, and the controller being configured to implement the method for controlling the photovoltaic energy storage device according to any one of claims 1 to 7.

10. A computer readable storage medium, storing a computer program, the computer program, when executed by a processor, causing the processor to implement the method for controlling a photovoltaic energy storage device according to any one of claims 1 to 7.
